# EUROPÄISCHE PATENTSCHRIFT

(11) **EP 0 988 656 B1**
(45) Veröffentlichungstag und Bekanntmachung des Hinweises auf die Patenterteilung: **02.10.2002**
(21) Anmeldenummer: 98933496.6
(22) Anmeldetag: 08.05.1998
(51) Int. Cl.: H01M 8/10, C25B 9/00, H01M 4/88, C25D 5/56

(54) **HERSTELLUNG VON ELEKTRODEN-ELEKTROLYT-EINHEITEN DURCH ELEKTROLYTISCHE ABSCHEIDUNG DES KATALYSATORS**
PRODUCTION OF ELECTROLYTE UNITS BY ELECTROLYTIC DEPOSITION OF A CATALYST
PRODUCTION D'ELECTRODE DE DIFFUSION GAZEUSE PAR DEPOT ELECTROLYTIQUE DU CATALYSEUR

(30) Priorität: 16.05.1997 DE 19720688
(43) Veröffentlichungstag der Anmeldung: 29.03.2000
(73) Patentinhaber: Forschungszentrum Jülich GmbH, 52425 Jülich (DE)
(72) Erfinder: DIVISEK, Jiri, D-52428 Jülich (DE); OETJEN, Hans-Friedrich, D-52441 Linnich (DE); SCHMIDT, Volkmar, Manfred, D-68519 Viernheim (DE)
(86) Internationale Anmeldenummer: DE9801302
(87) Internationale Veröffentlichungsnummer: WO98053515

(56) Entgegenhaltungen:
- EP-A- 0 048 505
- EP-A- 0 788 174
- WO-A-96/13073
- DE-A- 2 821 271
- FR-A- 2 624 885
- US-A- 3 356 538
- US-A- 4 293 394
- US-A- 5 284 571
- CHEMICAL ABSTRACTS, vol. 91, no. 22, 26. November 1979 Columbus, Ohio, US; abstract no. 184030, NOMURA, TADANORI ET AL: "Ion-exchange membrane composite" XP002079761 & JP 54 075488 A (ASAHI-DOW LTD., JAPAN)
- DATABASE WPI Section Ch, Week 7830 Derwent Publications Ltd., London, GB; Class L03, AN 78-55101A XP002079762 & SU 568 989 A (MOSC POWER INST) , 2. Januar 1977

## Beschreibung

Die Erfindung bezieht sich auf ein Verfahren zur Herstellung einer Elektroden-Elektrolyt-Einheit mit einer katalytisch aktiven Schicht.

Elektrochemisch arbeitende Einheiten, bestehend aus Elektrode-Elektrolyt-Einheit, sind z. B. für den Einsatz in Brennstoffzellen, Elektrolysezellen oder Zellen für elektroorganische Synthesen vorgesehen. Die Elektroden sind vorzugsweise durchgehend porös, damit Betriebsmittel wie Luft und Wasserstoff durch die Elektroden hindurchtreten können. Die an den elektrochemischen Reaktionen beteiligten Elektroden müssen in vielen Fällen mit geeigneten Katalysatoren aktiviert werden.

Für Brennstoffzellen, deren Betriebstemperaturen 0 - 150 °C betragen, werden ionenleitende Festelektrolyt-Membranen verwendet. Die Anode für die Wasserstoffoxidation und die Kathode für die Sauerstoffreduktion sind vorwiegend mit Platin, neuerdings auch mit Platin-Ruthenium-Legierungen belegt.

Das Prinzip einer derartigen Membran-Brennstoffzelle ist aus der Druckschrift "K. Kordesch, Günther Simader: Fuel Cells and Their Applications, VCH Weinheim, 1996" bekannt. Es werden dort ferner verschiedene Verfahren zur Herstellung von Membran-Elektroden-Einheiten für Brennstoffzellen beschrieben. So kann die Elektrode durch Aufsputtern einer dünnen Platinschicht auf die Diffusionsschicht der Gasdiffusionselektrode aktiviert werden. Weitere Herstellungsverfahren werden in der deutschen Patentanmeldung mit dem amtlichen Aktenzeichen 196 38 928.3-45 beschrieben. Eine Herstellung von Gasdiffusionselektroden durch ein Sprühverfahren ist der Druckschrift EP 0 687 024 A1 zu entnehmen.

Der wesentliche Nachteil der bekannten Elektroden-Elektrolyt-Einheiten mit elektrochemisch aktiven Bereichen ist in den hohen Kosten zu sehen. Der hohe Preis ist im wesentlichen auf teure Membranen, z. B. bestehend aus Nafion®, sowie teure Katalysatoren, z. B. bestehend aus Platin, zurückzuführen.

Zur Vermeidung von hohen Preisen wird daher versucht, dünne, katalytisch aktive Schichten im elektrochemisch aktiven Bereich zu plazieren. Die elektrochemischen Vorgänge in einer Brennstoffzelle laufen nämlich unmittelbar an der Kontaktstelle zwischen der Gasdiffusioselektrode und der Nafion®-Membran ab. Der Katalysator ist daher bevorzugt an diesen Kontaktstellen, mit anderen Worten an der Drei-Phasen-Zone, bestehend aus Gasverteiler mit elektronischer Stromabfuhr, Ort der elektrochemischen Reaktion und des Elektrolyten (hier: Nafion-Membran) zu plazieren.

Aus der Druckschrift US 5,084,144 sowie aus der Druckschrift "E.J. Taylor, E.B. Anderson, N.R.K. Vilambi, Journal of The Electrochemical Society, Vol. 139 (1992) L45-46" ist ein Verfahren zur Herstellung von Gasdiffusionselektroden mit dem Ziel bekannt, eine hohe Platinausnutzung für Membran-Brennstoffzellen zu erreichen. Verfahrensgemäß wird zur Herstellung einer dünnen, katalytisch aktiven Schicht u. a. eine elektrolytische Abscheidung eines Katalysatormetalls aus einem Galvanikbad durchgeführt.

Nachteilhaft sind beim aus US 5,084,144 bekannten Verfahren teure flüssige Galvanikbäder erforderlich, die aufwendig und kostenintensiv aufgearbeitet werden müssen. Außerdem ist die Nutzung des im Galvanikbad gelösten Edelmetalls sehr beschränkt, so daß die durch optimierte Abscheidung erhaltenen Vorteile beispielsweise durch Spülvorgänge wieder rückgängig gemacht werden.

Aufgabe der Erfindung ist die Schaffung eines kostengünstigen Herstellungsverfahrens für eine Elektroden-Elektrolyt-Einheit.

Die Aufgabe wird durch ein Verfahren mit den Merkmalen des Hauptanspruchs gelöst. Vorteilhafte Ausgestaltungen ergeben sich aus den rückbezogenen Ansprüchen.

Verfahrensgemäß wird gelöstes Metallsalz zunächst schichtförmig zwischen einen Elektrolyten und eine Elektrode gebracht. Das gelöste Metallsalz stellt so eine Zwischenschicht in einem mehrschichtigen (Schicht-) System dar. Das Metall wird anschließend elektrochemisch aus der Zwischenschicht, also aus dem gelösten Metallsalz abgeschieden.

Salze eines Metalls der VIII-Gruppe oder eines I-B-Metalls des Periodensystems können als Metallsalz vorgesehen werden, aus denen sich katalytisch aktives Metall abscheidet.

Soll z. B. Platin als katalytisch aktives Metall abgeschieden werden, so stellt z. B. H₂PtCl₆ oder Pt(NH₃)₄Cl₂ ein geeignetes Salz dar. Ein solches wird dann mit einem Lösungsmittel gemischt.

Als Lösungsmittel eignen sich beispielsweise Säuren wie HCl, H₂SO₄, HClO₄.

Zunächst kann die Metallsalz-Lösung schichtförmig auf die Elektrolytschicht oder die Elektrode durch Sprühen, Streichen, Siebdruck etc. aufgetragen werden. Auf diese nun schichtförmig vorliegende Lösung wird dann die Elektrode bzw. die Elektrolytschicht aufgebracht. Es liegt im Anschluß hieran ein Schichtsystem vor, das aus Elektrode, Metallsalzlösung und Elektrolyt besteht.

Die Schichtdicke bzw. die Menge des zwischen Elektrolyt und Elektrode gebrachten Metallsalzes ist z. B. so zu wählen, daß bis zu 0,01 - 1 mg Metall pro cm² aus der Zwischenschicht abgeschieden werden kann.

Die elektrolytische Abscheidung kann durch Fließen eines Gleichstroms oder eines pulsförmigen Stroms durch die Zwischenschicht bewirkt werden.

Um den für die Abscheidung erforderlichen Stromfluß herbeizuführen, wird beispielsweise eine zweite, ebenfalls an die Elektrolytschicht angrenzende Elektrode als weiterer Stromabnehmer vorgesehen. Die Elektrolytschicht befindet sich dann zwischen zwei Elektroden.

Es ist beim anspruchsgemäßen Verfahren kein flüssiger Elektrolyt für die elektrochemische Abscheidung notwendig. Dadurch werden teure, flüssige Galvanik-Bäder eingespart. Es entfällt die aufwendige und kostenträchtige Aufarbeitung und Entsorgung derartiger Galvanik-Bäder. Es wird lediglich eine dünne Schicht der Lösung aufgetragen. Der Verbrauch von teuren Metallen wie Platin, Ruthenium, Rhodium oder Palladium ist folglich minimiert worden.

Das katalytisch aktive Metall wird unmittelbar an der Drei-Phasen-Zone abgeschieden. Der während des bestimmungsgemäßen Einsatzes betroffene elektrochemisch aktive Bereich wird so gezielt mit Katalysatormaterial belegt.

Die Membran mit dem abgeschiedenen Katalysator kann daher vergleichsweise preiswert hergestellt werden.

Sind zu beiden Seiten der Elektrolytschicht Elektroden zusammen mit der aus Metallsalz-Lösung bestehenden Zwischenschicht angebracht worden, so kann dieser Elektroden-Elektrolyt-Verbund z. B. direkt in einer Brennstoffzelle eingesetzt werden.

Zur Herstellung einer Legierung enthält die Lösung in einer vorteilhaften Ausgestaltung des Verfahrens mehrere Metallsalze, die gemeinsam elektrochemisch abgeschieden werden. Es wird dann eine Legierung aus zwei oder mehreren Metallen oder Mischungen aus Metallen und Metalloxiden, also ein Legierungskatalysator abgeschieden. Insbesondere sind ruthenium- und platinhaltige Salze vorgesehen.

Diese Ausgestaltung des Verfahrens weist gegenüber dem bekannten Stand der Technik den Vorteil auf, Legierungskatalysatoren optimal abscheiden und gleichzeitig herstellen zu können.

In einer weiteren vorteilhaften Ausgestaltung der Erfindung enthält die Lösung ionenleitendes Polymer in gelöster bzw. in flüssiger Form.

Ionenleitendes Polymer in der Lösung soll nach Abschluß des Verfahrens fest mit der Membran (Elektrolytschicht) verbunden, also dann Bestandteil der Membran sein. Entsprechend dieser Zielsetzung ist das Polymer geeignet auszuwählen. Wird beispielsweise ein aus Nafion® bestehender Festelektrolyt verwendet, so wird insbesondere gelöstes Nafion® als ionenleitendes Polymer in der Lösung eingesetzt.

Das ionenleitende Polymer bewirkt eine Erhöhung der Drei-Phasen-Zone und damit eine weiter verbesserte Nutzung des Katalysatormaterials.

Katalytisch aktives Material wird als Folge der vorgenannten Ausgestaltung des Verfahrens im Feststoffelektrolyten eingebettet und ist mit diesem vorteilhaft mechanisch fest verbunden.

Das Verfahren ermöglicht die Herstellung einer elektrochemisch aktiven Katalysatorschicht auf einem geeigneten Träger, die als Gasdiffusionselektrode für elektrochemische Anwendungen z. B. in Brennstoffzellen, Elektrolysezellen oder Zellen für elektroorganische Synthesen geeignet ist. Mit dem Verfahren können in einfacher Weise Elektroden mit Metallkatalysatoren, Legierungen von Metallen oder Mischungen aus Metalloxiden und Metallen hergestellt werden. Durch das Verfahren werden nur geringe Mengen des teuren Katalysatormaterials verbraucht.

Das Verfahren ermöglicht in jeder Ausführungsform eine genaue Einwaage der Metallsalze. Es können so Legierungen oder Mischungen aus Metallen und Metalloxide für die aktive Schicht in einer exakt vorgegeben Zusammensetzung hergestellt werden. Es kann dem Fachmann überlassen bleiben, optimale Mischungsverhältnisse durch einfache Versuche aufzufinden.

Durch die elektrochemische Abscheidung wird die aktive Schicht auf der Diffusionsschicht gezielt an der Drei-Phasen-Zone zwischen dem Gasraum in den Poren der Gasdiffusionselektrode, dem elektroaktiven Katalysator und dem Elektrolyten gebildet. Damit wird die Katalysatorausnutzung in Anwendungen wie in Brennstoffzellen, Elektrolysezellen oder Zellen für elektroorganische Synthese optimiert und die benötigte Gesamtmenge deutlich reduziert.

Es kann eine Brennstoffzellen-Stapeleinheit mit fertigen Elektroden auf der einen Seite und nach dem Verfahren vorbereitete Elektroden auf der anderen Seite montiert werden. Die elektrolytische Abscheidung kann in der fertig monierten Brennstoffzelle durchgeführt werden.

Für Einmalanwendungen können Einheiten, bestehend aus einem ionenleitenden Festelektrolyten, einer gefertigten Gasdiffusionselektrode als Gegenelektrode und einer vorbereiteten Arbeitselektrode, durch Verschrauben mit geeigneter Abdichtung oder Einkleben oder ähnlichen Verfahren verkapselt werden. Für die Anwendung wird die aktive Elektrodenschicht durch kurzzeitige elektrolytische Abscheidung gebildet. Mögliche Verunreinigungen oder Reste der Metallsalzlösung können anschließend ausgewaschen werden.

### Ausführungsbeispiele

### 1. Beispiel:

Eine Diffusionsschicht für die technische Gasdiffusionselektrode, bestehend aus einer Mischung aus feinverteilter Kohle und PFTE, wird herstellt. Diese Diffusionsschicht enthält kein elektrochemisch aktives Material.

Es wird eine Lösung aus einer vorzugsweise 5 % igen Lösung von Nafion® in niedermolekularen Alkoholen, vorzugsweise 1-Propanol oder 2-Propanol, und einer wäßrigen Lösung von Hexachloroplatinsäurehydrat (H₂PtCl₆) hergestellt. Die Konzentrationen in der Mischung aus Nafion®-Lösung und Platinsalzlösungen können so eingestellt werden, daß die gewünschte Imprägnierung mit ionenleitendem Nafion® und die Katalysatorbelegung für die technische Gasdiffusionselektrode erreicht wird (vorzugsweise 0,01 - 1 mg Katalysator/cm², bezogen auf die geometrische Fläche der Elektrode). Die Mischung wird dann auf die Elektrode durch Sprühen, Streichen oder Siebdruck aufgebracht. Als Gegenelektrode wird zweckmäßigerweise eine geeignete Elektrode angebracht oder es wird eine Gegenelektrode mit einer zusätzlichen Elektrolytschicht verwendet. Diese Stapeleinheit wird in einer in der Figur gezeigten Vorrichtung gespannt. Durch Anlegen einer Stromdichte von im Anwendungsfall 0,1 - 10 mA/cm², z.B. 2 mA/cm², und einer Spannung von mindestens 1,23 V, z.B. 2 V, wird die Elektrolyse bei Raumtemperatur oder erhöhten Temperaturen (< 100 °C) solange betrieben, bis sich das Platin vollständig auf der porösen, elektrisch leitfähigen Schicht abgeschieden hat. Durch eine in der Figur gezeigte Zufuhr von H₂O wird sichergestellt, daß der polymere Festelektrolyt nicht austrocknet und folglich ionisch leitfähig ist bzw. bleibt. Danach wird die so hergestellte elektrochemisch aktive Gasdiffusionselektrode z. B. mit Wasserstoffperoxid, Wasser und Schwefelsäure behandelt und gereinigt.

Insbesondere in PEM-Brennstoffzellen werden Membran-Elektroden-Einheiten mit den gefertigten elektrochemisch aktiven Gasdiffusionselektroden eingesetzt und zwar z. B. mit einer Platinbelegung von jeweils ca. 0,1 mg/cm² für Anode und Kathode. Im Betrieb mit reinem Wasserstoff und Sauerstoff können bei einer Betriebstemperatur von 80 °C und bei einer Klemmenspannung von 0,7 V Stromdichten von mehr als 300 mA/cm² erreicht werden.

### 2. Beispiel:

Die Verfahrensweise entspricht dem vorgenannten Beispiel 1. Statt einer Platinsalzlösung wird jedoch eine Mischung aus Platin- und Rutheniumsalzlösungen (z. B.: H₂PtCl₆ und RuCl₃ in H₂SO₄) verwendet. Auf diese Weise lassen sich Platin-Ruthenium-Legierungen gewünschter Zusammensetzungen herstellen.

### 3. Beispiel:

Die Verfahrensweise entspricht dem Beispiel 1. Die Nafion®- und metallsalzhaltige Lösung wird direkt auf die Festelektrolyt-Membran durch Sprühen, Streichen oder Siebdruck aufgebracht. Darauf wird ein flexibles Graphitgewebe oder ein Graphitpapier mit geeigneter elektronischen Leitfähigkeit und geeigneter Porösität zwecks Herstellung einer elektrischen Kontaktierung gelegt. Die nachfolgenden Schritte sind wie in Beispiel 1.

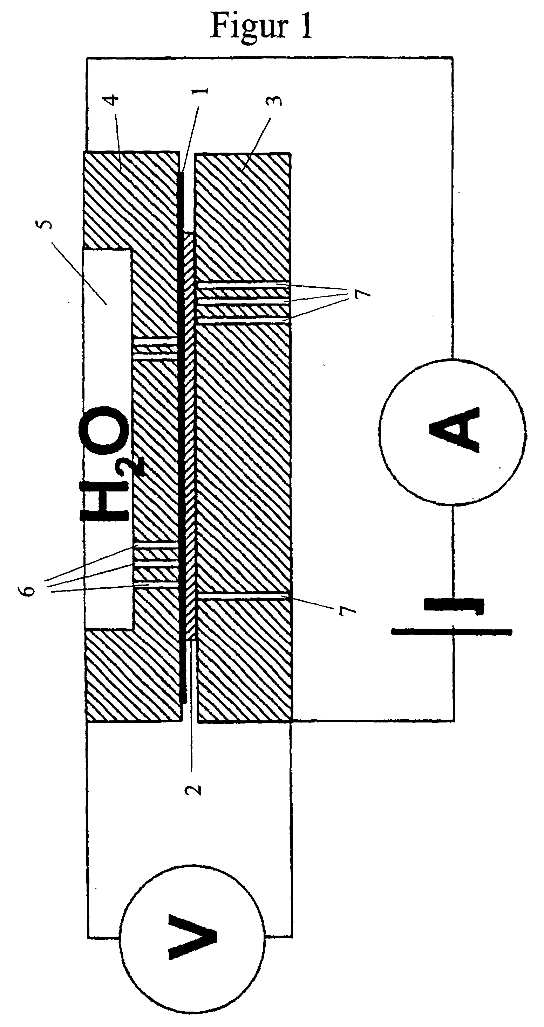

Figur 1 zeigt einen Schnitt durch eine schematisch dargestellte Elektrolytschicht 1 mit einer schichtförmig aufgebrachten Lösung 2. Zu beiden Seiten der Elektrolytschicht 1 befinden sich Elektroden 3 und 4. Die eine Elektrode 3 grenzt an die aufgebrachte Lösung 2 und die andere Elektrode 4 grenzt an die hierzu entgegengesetzte Seite der Elektrolytschicht 1. Die Elektrode 4 weist eine behälterförmige Aussparung 5 auf. Die behälterförmige Aussparung 5 soll mit Wasser gefüllt werden. In der Elektrode 4 befindliche Kanäle 6 führen von der behälterförmigen Aussparung 5 zur Membran 1. Die Membran 1 wird über die Kanäle 6 mit dem in der behälterförmigen Aussparung 5 befindlichem Wasser befeuchtet. Durch die Befeuchtung wird eine elektrische Leitfähigkeit der Membran bewirkt. Die elektrische Leitfähigkeit der Membran ist erforderlich, um die elektrochemische Abscheidung des Metalls aus der Lösung herbeizuführen. Zwecks Abscheidung wird in der aus Figur 1 ersichtlichen Weise ein Strom angelegt.

Über die Kanäle 7 werden die bei der elektrochemischen Abscheidung entstehenden Gase abgeleitet.

Die behälterförmigen Aussparung 5 kann ein nicht dargestelltes Verschlußelement aufweisen. Es kann dann im Behälter Wasserdampf erzeugt werden, der der Befeuchtung der Membran dient.

## Patentansprüche

1. Verfahren zur Herstellung einer Elektroden-Festelektrolyt-Einheit mit einer katalytisch aktiven Schicht, wobei in einem Lösungsmittel gelöstes Metallsalz (2) schichtförmig auf eine Festelektrolytschicht (1) oder eine Elektrode (3) insbesondere durch Sprühen, Streichen oder Siebdruck aufgetragen wird, auf diese aufgetragene Lösung die Elektrode (3) bzw. eine Festelektrolytschicht (1) aufgebracht wird, und das Metall elektrochemisch *in situ* aus dem Metallsalz abgeschieden wird
**dadurch gekennzeichnet,**
**daß** die bei der elektrochemischen Metallabscheidung entstehenden Gase durch wenigstens einen Kanal in der einen Elektrode (3) abgeführt werden, und die Elektrolytschicht durch wenigstens einen angrenzenden wassergefüllten Kanal in der anderen Elektrode (4) befeuchtet wird.

2. Verfahren mit den Merkmalen nach vorhergehendem Anspruch, bei dem mehrere in einer Lösung gelöste Metallsalze gemeinsam elektrochemisch abgeschieden werden.

3. Verfahren mit den Merkmalen nach einem der vorhergehenden Ansprüche, bei dem die Lösung mit dem einen oder den mehreren Metallsalzen ionenleitendes Polymer in gelöster oder in flüssiger Form aufweist.

## Claims

1. Process for the production of an electrode/solid electrolyte unit having a catalytically active layer, involving the layered application of metallic salt (2) dissolved in a solvent onto a solid electrolyte layer (1) or an electrode (3), more particularly by spraying or brushing it on or by screen printing, then applying the electrode (3) or a solid electrolyte layer (1), respectively, onto said coated-on solution, and electrochemically precipitating the metal from the metallic salt *in situ*,
**characterised in that** the gases produced during the electrochemical precipitation of the metal are taken away by at least one channel in one electrode (3), and the electrolyte layer is moistened by at least one contiguous water-filled channel in the other electrode (4).

2. Process incorporating the features of the preceding claim, wherein a plurality of metallic salts dissolved in a solution are jointly precipitated electrochemically.

3. Process incorporating the features of either one of the preceding claims, wherein the solution containing the one or more metallic salts exhibits ion-conducting polymer in a dissolved or liquid form.

## Revendications

1. Procédé pour la production d'une unité électrode/électrolyte solide présentant une couche active catalytique, moyennant quoi un sel métallique (2) dissous dans un solvant est appliqué sous forme de couche sur une couche d'électrolyte solide (1) ou une électrode (3), notamment grâce à une pulvérisation, une enduction ou une sérigraphie, l'électrode (3), respectivement une couche d'électrolyte solide (1) étant déposée sur cette solution appliquée, et le métal étant déposé *in situ* à partir du sel métallique par des moyens électrochimiques, **caractérisé en ce que**
les gaz apparaissant lors du dépôt électrochimique sont transportés à travers au moins un canal jusque dans ladite une électrode (3), et **en ce que** la couche d'électrolyte est humidifiée par au moins un canal adjacent rempli d'eau dans l'autre électrode (4).

2. Procédé comprenant les caractéristiques selon la revendication précédente, dans lequel plusieurs sels métalliques dissous dans une solution sont déposés ensemble par des moyens électrochimiques.

3. Procédé comprenant les caractéristiques selon l'une des revendications précédentes, dans lequel la solution présente, avec ledit un ou ladite pluralité de sels métalliques, un polymère conducteur d'ions sous forme dissoute ou liquide.
